# EUROPÄISCHE PATENTANMELDUNG

(11) **EP 1 209 451 A1**
(43) Veröffentlichungstag der Anmeldung: **29.05.2002**
(21) Anmeldenummer: 01126724.2
(22) Anmeldetag: 08.11.2001
(51) Int. Cl.: G01F 23/284

(54) **Füllstandmessgerät**

(30) Priorität: 13.11.2000 DE 10056099; 15.01.2001 DE 10101714
(71) Anmelder: Krohne S.A., 26103 Romans - Cedex (FR)
(72) Erfinder: Bletz, Achim, 26260 Clérieux (FR)
(74) Vertreter: Gesthuysen, von Rohr & Eggert

(57) **Zusammenfassung**

Dargestellt und beschrieben ist eine Füllstandsmeßanordnung, mit einem Füllstandsmeßgerät und einem Behälter (1), wobei das Füllstandsmeßgerät nach dem Radarprinzip arbeitet, zum Messen des Füllstandes eines in den Behälter (1) eingefüllten Mediums (2) vorgesehen ist und eine elektrische Leiteranordnung (3) und einen Signalgenerator zum Erzeugen und Aussenden eines elektromagnetischen Signals aufweist, die Leiteranordnung (3) in den Behälter (1) hineinreicht sowie wenigstens bis zum Bereich des Bodens (4) des Behälters (1) führt und der Signalgenerator am außerhalb des Mediums (2) vorgesehenen Ende der Leiteranordnung (3) angeordnet ist, so daß an dem außerhalb des Mediums (2) vorgesehenen Ende der elektrischen Leiteranordnung (3) das von dem Signalgenerator erzeugte elektromagnetische Signal in die elektrischen Leiteranordnung (3) einkoppelbar ist.

Erfindungsgemäß ist vorgesehen, daß die Laufzeit des elektromagnetischen Signals vom Signalgenerator bis zum Bereich des Bodens (4) des Behälters (1) geringer ist als die Laufzeit des elektromagnetischen Signals vom Signalgenerator bis zu dem in dem Behälter (1) befindlichen Ende der elektrischen Leiteranordnung (3), so daß ein möglichst großer, praktisch bis an den Boden (4) heranreichenden Arbeitsbereich erzielt wird, womit der untere Totbereich nahezu eliminiert ist.

## Beschreibung

Die Erfindung betrifft eine Füllstandsmeßanordnung, mit einem Füllstandsmeßgerät und einem Behälter, wobei das Füllstandsmeßgerät nach dem Radarprinzip arbeitet, zum Messen des Füllstandes eines in den Behälter eingefüllten Mediums vorgesehen ist und einen Signalgenerator zum Erzeugen und Aussenden eines elektromagnetischen Signals sowie eine elektrische Leiteranordnung aufweist, der Signalgenerator am außerhalb des Mediums vorgesehenen Ende der Leiteranordnung angeordnet ist, so daß an dem außerhalb des Mediums vorgesehenen Ende der Leiteranordnung das von dem Signalgenerator erzeugte elektromagnetische Signal in die Leiteranordnung einkoppelbar ist, und die Leiteranordnung in den Behälter hineinreicht sowie wenigstens bis zum Bereich des Bodens des Behälters führt. Die Erfindung betrifft ferner ein Füllstandsmeßgerät, das nach dem Radarprinzip arbeitet, zum Messen des Füllstandes eines in einen Behälter eingefüllten Mediums, mit einem Signalgenerator zum Erzeugen und Aussenden eines elektromagnetischen Signals und einer elektrischen Leiteranordnung, wobei der Signalgenerator am außerhalb des Mediums vorgesehenen Ende der Leiteranordnung angeordnet ist, so daß an dem außerhalb des Mediums vorgesehenen Ende der Leiteranordnung das von dem Signalgenerator erzeugte elektromagnetische Signal in die Leiteranordnung einkoppelbar ist

Das Meßverfahren einer solchen Füllstandsmeßanordnung bzw. eines solchen Füllstandsmeßgerätes, das nach dem Radarprinzip arbeitet, basiert auf dem TDR-Meßprinzip (Time Domain Reflectometry), das z. B. aus dem Bereich der Kabelprüfung bekannt ist und Ähnlichkeiten mit der Funktionsweise von Radargeräten aufweist. Bei einem solchen TDR-Füllstandsmeßgerät wird z. B. ein extrem kurzer elektrischer Impuls über eine im wesentlichen gerade verlaufende elektrische Leiteranordnung in einen Behälter ausgesandt, in dem sich ein Medium, wie eine Flüssigkeit, ein Pulver oder ein Granulat befindet, dessen Füllstandshöhe bestimmt werden soll. Dabei ist typischerweise eine solche elektrische Leiteranordnung vorgesehen, die in das Medium hineinreicht und zwei nebeneinander, im allgemeinen parallel zueinander verlaufende Leiter aufweist. Ein in eine solche elektrische Leiteranordnung eingekoppelter elektrischer Impuls läuft dann quasi "zwischen" den beiden Leitern in den Behälter hinein und wird dann an der Oberfläche des Mediums reflektiert, wobei der reflektierte Anteil des kurzen elektrischen Impulses von einem Meßumformer des Meßgeräts wieder detektiert wird. Der reflektierte Anteil des kurzen elektrischen Impulses hängt von der Dielektrizitätszahl des Mediums ab und steigt mit dieser. Dabei ist die Laufzeit des Signals proportional zum Abstand des Impulsgenerators bzw. des Meßumformers zur Oberfläche des in dem Behälter befindlichen Mediums. Sich verändernde Umgebungsbedingungen, wie ein steigender oder ein fallender Umgebungsdruck oder eine steigende oder eine fallende Temperatur, beeinträchtigen die Meßgenauigkeit des TDR-Füllstandsmeßgerät nicht. Außerdem ist die Laufzeit des Signals unabhängig von der Dielektrizitätszahl des Mediums, dessen Füllstand gemessen werden soll.

Mit herkömmlichen Füllstandsmeßgeräten, die nach dem Radarprinzip arbeiten, ist die Bestimmung des Füllstands des Mediums in dem Behälter lediglich in einem sogenannten Arbeitsbereich möglich, der sich - im Falle eines direkt an der oberen Begrenzung des Behälters angeordneten Signalgenerators - von kurz unterhalb des Signalgenerators bis hin zum Bereich des Bodens des Behälters erstreckt, jedoch in einem gewissen Abstand über dem Boden des Behälters endet. Der maximale Arbeitsbereich wird dann erzielt, wenn die Leiteranordnung mit ihrem in dem Behälter befindlichen Ende bis an den Boden des Behälters heran reicht. Dann nämlich ist die untere Grenze des Arbeitsbereichs dadurch gegeben, daß die Oberfläche des Mediums, die sich unterhalb der unteren Grenze des Arbeitsbereichs befindet, lediglich zu einer solchen Reflexion des von dem Signalgenerator herkommenden elektromagnetischen Signals führt, die von der Reflexion des elektromagnetischen Signals überlagert wird, die am Ende der Leiteranordnung auftritt. Im allgemeinen ist nämlich die am Ende der Leiteranordnung auftretende Reflexion des von dem Signalgenerator herkommenden elektromagnetischen Signals so groß, daß alle anderen, sich im Bereich dieser Reflexion befindlichen Reflexionseffekte, insbesondere nämlich die von der Oberfläche des Mediums herrührenden Reflexionsanteile des elektromagnetischen Signals, vollständig überdeckt werden.

Der Bereich unter der unteren Grenze des Arbeitsbereichs bis zum Boden des Behälters, in dem dieser zuvor beschriebene Überdeckungseffekt auftritt, wird unterer Totbereich genannt. Die Höhe des unteren Totbereichs, also dessen Erstreckung vom Boden des Behälters nach oben, hängt unter anderem von der Dielektrizitätszahl des in dem Behälter befindlichen Mediums, der zeitlichen Dauer des von dem Signalgenerator erzeugten und ausgesandten elektromagnetischen Signals und der Art des Endes der Leiteranordnung ab. Ferner hängt die Höhe des unteren Totbereichs von dem Wellenwiderstand der Leiteranordnung ab.

Im Stand der Technik sind verschiedene Anstrengungen unternommen worden, um den unteren Totbereich zu eliminieren bzw. wenigstens zu reduzieren. Dabei ist unter anderem derart vorgegangen worden, daß das Signal, das durch die Reflexion des von dem Signalgenerator herkommenden elektromagnetischen Signals am Ende der Leiteranordnung erzeugt und von dem Meßumformer detektiert wird, im Speicher der Meßelektronik gehalten wird, die die Auswertung der detektierten reflektierten Signale übernimmt, so daß dieses aufgrund der Reflexion am Ende der Leiteranordnung erwartete Signal von dem tatsächlich gemessenen Signal subtrahiert werden kann. Dieses Verfahren arbeitet dann durchaus verläßlich, wenn ein unterer Totbereich von einigen Zentimetern noch tolerierbar ist. Jedoch wird dieses Verfahren durch das Signal-zu-Rausch-Verhältnis der gesamten Füllstandsmeßanordnung stark beeinflußt und entsprechend beschränkt.

Somit ist es die Aufgabe der Erfindung, eine solche Füllstandsmeßanordnung bzw. ein solches Füllstandsmeßgerät anzugeben, die bzw. das einen möglichst großen, praktisch bis an den Boden des Behälters heranreichenden Arbeitsbereich aufweist, so daß der untere Totbereich nahezu eliminiert wird.

Die erfindungsgemäße Füllstandsmeßanordnung, mit der die zuvor hergeleitete und aufgezeigte Aufgabe gelöst ist, ist dadurch gekennzeichnet, daß die Laufzeit des elektromagnetischen Signals vom Signalgenerator bis zum Bereich des Bodens des Behälters geringer ist als die Laufzeit des elektromagnetischen Signals vom Signalgenerator bis zu dem in dem Behälter befindlichen Ende der elektrischen Leiteranordnung.

Durch das Vorsehen der zuvor angegebenen erfindungsgemäßen Maßnahme wird das von der Reflexion am Ende der Leiteranordnung herrührende Signal zeitlich immer deutlich nach solchen Signalen detektiert, die von Reflexionen an der Oberfläche des Mediums herrühren, selbst wenn das Medium nur noch eine äußerst geringe Füllhöhe aufweist. Dabei ist eine solche Weiterbildung der Erfindung bevorzugt, bei der die Gesamtlänge der Leiteranordnung vom Signalgenerator bis zu seinem in dem Behälter befindlichen Ende größer ist als die Weglänge der Leiteranordnung vom Signalgenerator bis zum Bereich des Bodens des Behälters.

Gemäß einer anderen bevorzugten Weiterbildung der Erfindung ist vorgesehen, daß die Leiteranordnung in den Boden des Behälters hineinreicht. Für diese bevorzugte Weiterbildung der Erfindung muß also in dem Boden des Behälters eine Ausnehmung vorgesehen sein, so daß die Leiteranordnung hinreichend lang ausgebildet werden kann, ohne daß eine parallel zum Boden des Behälters verlaufende oder nach oben weisende Umbiegung der Leiteranordnung vorliegt.

Grundsätzlich sind verschiedene Verläufe der Leiteranordnung vom Signalgenerator bis zum Bereich des Bodens des Behälters möglich, wobei für eine einfache Auswertbarkeit der an der Oberfläche des Mediums reflektierten Signale im allgemeinen darauf geachtet wird, daß die Leiteranordnung im Behälter auf im wesentlichem geraden Wege verläuft. Gemäß einer bevorzugten Weiterbildung der Erfindung ist dann vorgesehen, daß die Leiteranordnung im Bereich des Bodens des Behälters eine Umbiegung aufweist. Gemäß dieser bevorzugten Weiterbildung der Erfindung wird eine größere Gesamtlänge der Leiteranordnung vom Signalgenerator bis zu ihrem in dem Behälter befindlichen Ende als die Weglänge der Leiteranordnung vom Signalgenerator bis zum Bereich des Bodens des Behälters dadurch realisiert, daß dort, wo die Leiteranordnung nicht weiter in den Behälter hineinragen kann, nämlich am Boden des Behälters, die Leiteranordnung in eine andere Richtung weitergeführt wird.

Dabei ist grundsätzlich die Weiterführung der Leiteranordnung parallel zum Boden des Behälters oder in den gesamten nach oben weisenden Raumwinkel möglich. Gemäß einer bevorzugten Weiterbildung der Erfindung ist jedoch vorgesehen, daß die Leiteranordnung nach der Umbiegung im wesentlichen parallel zum Boden des Behälters oder alternativ dazu parallel zu ihrem Abschnitt vor der Umbiegung verläuft. Gemäß der zuvor genannten ersten Alternative kann die Leiteranordnung nämlich in dem Behälter derart angeordnet werden, daß sie mit ihrem untersten Abschnitt auf dem Boden des Behälters aufliegt. Gemäß der zuvor genannten zweiten Alternative ist es z. B. möglich, die Umbiegung der Leiteranordnung dadurch zu realisieren, daß der unterste Abschnitt der Leiteranordnung auf den vor ihm liegenden Abschnitt umgeklappt und an diesem fixiert wird. Dabei kann es je nach Installationssituationen von Vorteil sein, daß die Leiteranordnung eine feste, also eine steife Umbiegung oder aber eine flexible Umbiegung aufweist.

Verläuft die Leiteranordnung in dem Behälter gerade und senkrecht, so wird, wenn der Signalgenerator direkt am oberen Ende des Behälters vorgesehen ist, gemäß einer bevorzugten Weiterbildung der Erfindung die weiter oben genannte erfindungsgemäße Maßnahme besonders einfach dadurch realisiert, daß ein Füllstandsmeßgerät mit einer solchen Leiteranordnung verwendet wird, deren Länge vom Signalgenerator bis zu dem in dem Behälter befindlichen Ende größer ist als die Höhe des Behälters.

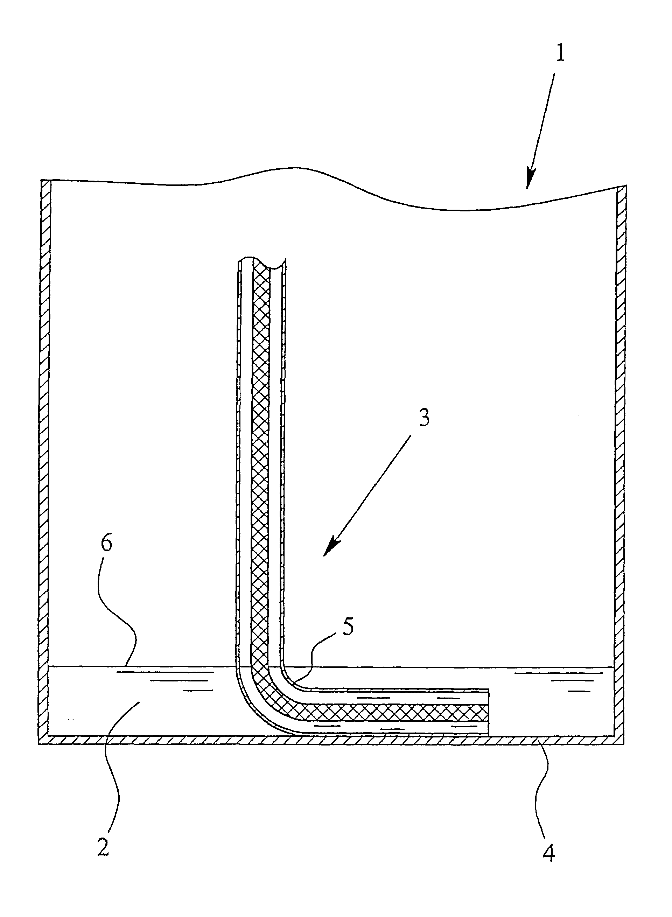

Im einzelnen gibt es nun eine Vielzahl von Möglichkeiten, die erfindungsgemäße Füllstandsmeßanordnung bzw. das erfindungsgemäße Füllstandsmeßgerät auszugestalten und weiterzubilden. Dazu wird auf die dem Patentanspruch 1 nachgeordneten Patentansprüche sowie die nachfolgende detaillierte Beschreibung eines bevorzugten Ausführungsbeispiels der Erfindung unter Bezugnahme auf die Zeichnung verwiesen. In der Zeichnung zeigt die einzige Figur eine in einem Behälter angeordnete Leiteranordnung eines Füllstandsmeßgeräts gemäß einem bevorzugten Ausführungsbeispiel der Erfindung im Schnitt.

Aus der Figur ist schematisch ein Behälter 1 ersichtlich, in den ein Medium 2 eingefüllt ist. Von oben herkommend reicht in diesen Behälter 1 eine elektrische Leiteranordnung 3 hinein, die bis zum Boden 4 des Behälters 1 verläuft. Bei der Leiteranordnung 3 handelt es sich um eine Koaxialleiteranordnung, bei der ein Innenleiter von einem Außenleiter umgeben ist, wobei das zu messende Medium 2 zwischen Innenleiter und Außenleiter gelangt, da das untere Ende der elektrischen Leiteranordnung 3 wenigstens teilweise offen ist. Im Bereich des Bodens 4 des Behälters 1 weist die Leiteranordnung 3 eine Umbiegung 5 auf. Nach dieser Umbiegung 5 verläuft die Leiteranordnung 3 auf dem Boden 4 des Behälters 1 weiter.

Bei der in der Figur dargestellten Situation weist das Medium 2 nur eine geringe Füllstandshöhe auf, so daß sich seine Oberfläche 6 nur wenig oberhalb des Bodens 4 des Behälters 1 befindet. Ein von dem nicht weiter dargestellten Signalgenerator herkommendes Signal erfährt nun an der Stelle, an der die Leiteranordnung 3 die Oberfläche 6 des Mediums 2 durchdringt bzw. sich die Oberfläche des Mediums in der elektrischen Leiteranordnung 3 zwischen dem Innenleiter einerseits und dem Außenleiter andererseits befindet, eine anteilige Reflexion, die zum ebenfalls nicht dargestellten Meßumformer zurück reflektiert wird. Diese von der Oberfläche 6 des Mediums 2 herrührende Reflexion wird nun nicht durch das Signal gestört bzw. überdeckt, das durch eine Reflexion des von dem Signalgenerator herkommenden Signals am Ende der Leiteranordnung 3 erzeugt wird, da die von dem Signal zurückzulegende Wegstrecke bis zum Ende der Leiteranordnung 3 größer ist als bis zum Boden 4 des Behälters 1. Damit wird das von der Reflexion am Ende der Leiteranordnung 3 herrührende Signal zeitlich deutlich nach dem Signal detektiert, das von der Oberfläche 6 des Mediums 2 herrührt und einen Aufschluß über die Füllstandshöhe des Mediums 2 in dem Behälter 1 zuläßt.

## Patentansprüche

1. Füllstandsmeßanordnung, mit einem Füllstandsmeßgerät und einem Behälter (1), wobei das Füllstandsmeßgerät nach dem Radarprinzip arbeitet, zum Messen des Füllstandes eines in den Behälter (1) eingefüllten Mediums (2) vorgesehen ist und einen Signalgenerator zum Erzeugen und Aussenden eines elektromagnetischen Signals sowie eine elektrische Leiteranordnung (3) aufweist, der Signalgenerator am außerhalb des Mediums (2) vorgesehenen Ende der Leiteranordnung (3) angeordnet ist, so daß an dem außerhalb des Mediums (2) vorgesehenen Ende der Leiteranordnung (3) das von dem Signalgenerator erzeugte elektromagnetische Signal in die Leiteranordnung (3) einkoppelbar ist, und die Leiteranordnung (3) in den Behälter (1) hineinreicht sowie wenigstens bis zum Bereich des Bodens (4) des Behälters (1) führt, **dadurch gekennzeichnet, daß** die Laufzeit des elektromagnetischen Signals vom Signalgenerator bis zum Bereich des Bodens (4) des Behälters (1) geringer ist als die Laufzeit des elektromagnetischen Signals vom Signalgenerator bis zu dem in dem Behälter (1) befindlichen Ende der elektrischen Leiteranordnung (3).

2. Füllstandsmeßanordnung nach Anspruch 1, **dadurch gekennzeichnet, daß** die Gesamtlänge der Leiteranordnung (3) vom Signalgenerator bis zu seinem im Behälter (1) befindlichen Ende größer ist als die Weglänge der Leiteranordnung (3) vom Signalgenerator bis zum Bereich des Bodens (4) des Behälters (1).

3. Füllstandsmeßanordnung nach Anspruch 2, **dadurch gekennzeichnet, daß** die Leiteranordnung (3) bis zum Bereich des Bodens (4) des Behälters (1) auf im wesentlichem geraden Wege verläuft und im Bereich des Bodens (4) des Behälters (1) eine Umbiegung (5) aufweist.

4. Füllstandsmeßanordnung nach Anspruch 3, **dadurch gekennzeichnet, daß** die Leiteranordnung (3) nach der Umbiegung (5) im wesentlichen parallel zum Boden (4) des Behälters (1) verläuft.

5. Füllstandsmeßanordnung nach Anspruch 3, **dadurch gekennzeichnet, daß** die Leiteranordnung (3) nach der Umbiegung (5) im wesentlichen parallel zu ihrem Abschnitt vor der Umbiegung (5) verläuft.

6. Füllstandsmeßanordnung nach Anspruch 2, **dadurch gekennzeichnet, daß** die Leiteranordnung (3) in den Boden (4) des Behälters (1) hineinreicht.

7. Füllstandsmeßanordnung nach einem der Ansprüche 1 bis 6, **dadurch gekennzeichnet, daß** die Länge der Leiteranordnung (3) vom Signalgenerator bis zu ihrem in dem Behälter (1) befindlichen Ende größer ist als die Höhe des Behälters (1).
